# EUROPÄISCHE PATENTSCHRIFT

(11) **EP 2 886 401 B1**
(45) Veröffentlichungstag und Bekanntmachung des Hinweises auf die Patenterteilung: **27.04.2016**
(21) Anmeldenummer: 14194273.0
(22) Anmeldetag: 21.11.2014
(51) Int. Cl.: B60R 25/0215, H02K 5/00, H02K 5/22

(54) **Antriebsanordnung einer Lenkverriegelung**
Drive assembly of a steering lock
Système d'entraînement d'un verrouillage de direction mécanique

(30) Priorität: 23.12.2013 DE 102013114787
(43) Veröffentlichungstag der Anmeldung: 24.06.2015
(73) Patentinhaber: Huf Hülsbeck & Fürst GmbH & Co. KG, 42551 Velbert (DE)
(72) Erfinder: ZILLMANN, Horst, 81243 München (DE)
(74) Vertreter: Zenz Patentanwälte Partnerschaft mbB

(56) Entgegenhaltungen:
- WO-A1-2007/099761
- WO-A1-2012/126517
- DE-A1-102013 105 429
- DE-C1- 10 109 609
- GB-A- 2 356 914
- JP-A- 2001 258 199
- US-A1- 2010 083 716

## Beschreibung

Die Erfindung richtet sich auf eine Antriebsanordnung einer elektrischen Lenkverriegelung, die eine Antriebseinheit, die einen Antriebsmotor mit einer Antriebswelle umfasst, ein Trägerelement, welches einen rahmenförmigen Motorhalter zur Aufnahme des Antriebsmotors und eine Lagerstütze zur drehbaren Lagerung eines Wellenendes der Antriebswelle aufweist, und eine zur Stromversorgung des Antriebsmotors ausgebildete Steckverbindung, die mit ihrem ersten Ende an einem Funktionselement der Antriebsanördnung befestigt ist und dort mit Strom versorgt wird und die mit ihrem zweiten Ende mit dem Antriebsmotor in Verbindung steht, aufweist.

Eine Antriebsanordnung der eingangs genannten Art ist zum Beispiel aus der DE 101 09 609 C1 bekannt. Bei dieser bekannten Antriebsanordnung, die für eine Lenkverriegelung vorgesehen ist, umfasst eine Antriebseinheit einen Antriebsmotor, dessen Drehrichtung umkehrbar ist und der mit einer Antriebswelle gekoppelt ist. Die Antriebswelle weist eine Antriebsschnecke auf, die in eine Außenverzahnung eines Antriebsrades der Antriebsanordnung eingreift. Das vom Antriebsmotor über die Antriebswelle und die Antriebsschnecke angetriebene Antriebsrad wirkt ferner mit einem Sperrbolzen zusammen, der zur Verriegelung einer Lenkspindel eines Kraftfahrzeugs dient.

Im Allgemeinen sind bei einer-solchen bekannten, für eine elektrische Lenkverriegelung vorgesehenen Antriebsanordnung zur Versorgung des elektrischen Antriebsmotors stiftförmige Kontaktelemente vorgesehen, die an einem ihrer beiden Längsenden mit dem Motor in Kontakt stehen und mit ihrem anderen Längsende an eine Stromversorgungsquelle, die beispielsweise an dem als Platine oder Leiterplatte ausgebildeten Funktionselement vorgesehen ist, angeschlossen sind. Dabei erlauben die stiftförmigen Kontaktelemente ein einfaches Zusammenstecken und Demontieren der einzelnen Bauteile, wobei die stiftförmigen Kontaktelemente darüber hinaus dem modularen Aufbau der Antriebsanordnung gerecht werden, bei welcher als Antriebsmotor üblicherweise ein standardisierter Elektromotor verwendet wird. Trotz dieser Standardisierung und Modulbauweise ist eine sichere Kontaktierung des Antriebsmotors über die stiftförmigen Kontaktelemente aufgrund von Abweichungen von Nennmaßen nicht immer gewährleistet, wodurch insgesamt eine sichere Funktionsweise der Lenkverriegelung nicht zu jeder Betriebsphase sichergestellt ist.

Der Erfindung liegt die Aufgabe zugrunde eine Lösung zu schaffen, die auf konstruktiv einfache Weise eine verbesserte Antriebsanordnung einer Lenkverriegelung bereitstellt, die kostengünstig in ihrer Herstellung ist, ein hohes Maß an Funktionssicherheit aufweist und die Kontaktierung von Antriebsmotor und Steckverbindung sicherstellt.

Bei einer Antriebsanordnung der eingangs bezeichneten Art wird die Aufgabe erfindungsgemäß dadurch gelöst, dass ein sich parallel zur Steckverbindung erstreckender Kontakthalter mit seinem ersten Längsende an der Funktionsplatte befestigt ist, wobei das zweite Längsende des Kontakthalters mit einem an dem Trägerelement ausgebildeten Rastansatz in einer das zweite Ende der Steckverbindung in Richtung des Antriebmotors drängenden Weise lösbar verbunden ist.

Vorteilhafte und zweckmäßige Ausgestaltungen und Weiterbildungen der Erfindung ergeben sich aus den Unteransprüchen.

Durch die Erfindung wird eine Antriebsanordnung einer elektrischen Lenkverriegelung zur Verfügung gestellt, welche sich durch eine einfache, kompakte und preisgünstige Bauweise auszeichnet. Dadurch, dass der Kontakthalter die Steckverbindung hin zum Antriebsmotor drängt und damit in dessen Richtung drückt, ist sichergestellt, dass die zur Versorgung des Antriebsmotors erforderliche Kontaktierung mit der Steckverbindung zu jeder Zeit gegeben ist. Die dazu erforderliche Kraft muss nicht sehr groß bemessen sein, da sie im Wesentlichen dazu vorgesehen ist, kleinere Abweichungen, welche zulässige Toleranzen der mechanischen Kontaktierung des Antriebsmotors mit der Steckverbindung überschreiten, auszugleichen. Folglich steht die Steckverbindung mit dem Antriebsmotor gemäß der vorliegenden Erfindung sowohl in elektrischer als auch in mechanischer Verbindung.

Die Erfindung sieht in Ausgestaltung der Antriebsanordnung vor, dass das zweite Längsende des Kontakthalters als wenigstens ein Federarm mit einem endseitig angeformten Rasthaken ausgebildet ist, wobei der Rasthaken des wenigstens einen Federarms den am Trägerelement ausgebildeten Rastansatz in einer das Trägerelement in Richtung des Funktionselements ziehenden Weise hintergreift. Zwar wird bei relativer Betrachtung die Steckverbindung nach wie vor in Richtung des Antriebsmotors gedrängt. Jedoch ist es auch so, dass aus der Sicht des Antriebsmotors die Verbindung von Steckverbindung und Antriebsmotor mit einer Zugkraft beaufschlagt ist, so dass der Kontakthalter das Trägerelement und damit den im Motorhalter des Trägerelements gehaltenen Antriebsmotor zu sich zieht. Diese formschlüssige Verbindung zwischen elastischem Federarm und Rastansatz ist lösbar, was dem modularen Aufbau der Antriebsanordnung gerecht wird und einen einfachen Austausch des Antriebsmotors gewährleistet, sollte dies einmal erforderlich werden.

Von besonderem Vorteil ist es dabei, wenn die Verbindung des zweiten Längsendes des Kontakthalters mit dem Rastansatz des Trägerelements nach Art einer Steckschnalle ausgebildet ist, wobei der Rastansatz des Trägerelements als Einsteckteil mit einer Einstecköffnung, in welche das zweite Längsende des Kontakthalters in das Einsteckteil unter elastischer Verformung einsteckbar ist, und einer Rastöffnung, bis zu der das zweite Längsende des Kontakthalters in das Einsteckteil eingesteckt ist und unter elastischer Zurückverformung den Rand der Rastöffnung in einer das Trägerelement in Richtung des Funktionselements ziehenden Weise hintergreift, ausgebildet ist. Das Einsteckteil dient als Zentrierorgan, wodurch eine korrekte Ausrichtung der Steckverbindung gewährleistet ist. Das Einsteckteil hat gleichzeitig die Funktion, eine schwimmende oder mit Spiel behaftete Halterung der Steckverbindung zu verhindern, so dass eine Bewegung der Steckverbindung quer und senkrecht sowohl zum Kontakthalter als auch zum Funktionselement verhindert ist.

Eine kompakte Ausbildung des Kontakthalters, welche den Einbauraum gering hält, ist in Ausgestaltung der Erfindung dadurch gegeben, dass das zweite Längsende des Kontakthalters zwei in Richtung zu sich selbst elastisch verformbare Verriegelungsarme aufweist, welche mit ihren hakenförmig ausgebildeten Enden den Rand der Rastöffnung hintergreifen.

Zur Herstellung einer elektrischen Verbindung mit hoher mechanischer Stabilität bei niedrigen Einpress- und hohen Haltekräften sieht die Erfindung in Ausgestaltung vor, dass die Steckverbindung zwei Stifte umfasst, wobei ein jeweiliges erstes Ende eines jeweiligen Stiftes in eine entsprechend zugeordnete metallisierte Lochwandung des Funktionselements in elektrisch verbindender Weise eingepresst ist. Diese Einpresstechnik stellt eine lötfreie elektromechanische Verbindungsmethode bereit, bei der elastisch verformbare oder massive Stifte in die metallisierten Löcher gepresst werden, wodurch eine dauerhafte und gasdichte Verbindung entsteht. Die Löcher sind in dem Funktionselement ausgeformt, wobei das Funktionselement vorliegend eine Platine oder Leiterplatte sein kann. Diesbezüglich ist es in Ausgestaltung der erfindungsgemäßen Antriebsanordnung vorteilhaft, wenn das erste Längsende des Kontakthalters mit dem Funktionselement formschlüssig verbunden ist.

Gemäß einer weiteren Ausgestaltung der Erfindung sind die zwei Stifte von dem Kontakthalter parallel zueinander verlaufend gehalten. Das Trägerelement der Antriebsanordnung der elektrischen Lenkverriegelung kann im Hinblick auf eine Gewichtsreduktion kostengünstig im Spritzgussverfahren aus Kunststoff hergestellt sein, wobei aus Kostengründen ein thermoplastischer Kunststoff, wie zum Beispiel PBT, Polyamid, Polypropylen, Polycarbonat oder ein anderer geeigneter Kunststoff vorgesehen sein kann.

Um eine Beschädigung des Antriebsmotors oder der Stifte der Steckverbindung des Kontakthalters zu verhindern, sieht die Erfindung in einer Ausgestaltung vor, dass der Kontakthalter wenigstens einen Abstandsstift mit einem freien Ende aufweist, wobei sich der wenigstens eine Abstandsstift parallel zur Steckverbindung erstreckt und sein freies Ende in einer ein Rauswandern des Antriebsmotors aus dem rahmenförmigen Motorhalter verhindernden Weise auf dem Antriebsmotor aufliegt. Der Abstandsstift verhindert damit, dass die Stifte der Steckverbindung zu "tief" in die Stiftaufnahmen des Antriebsmotors eingesteckt werden und dass der Antriebsmotor andererseits nicht aus dem Motorhalter herausgelangen kann.

Damit das seitliche Spiel des Antriebsmotors reduziert werden kann, ist ferner bei der Antriebsanordnung gemäß der Erfindung vorgesehen, dass der rahmenförmige Motorhalter an seiner dem Antriebsmotorkopf zugewandten Rahmenseite eine den Antriebsmotor in dessen Axialrichtung einspannende Klemmrippe aufweist. Folglich ist das der Antriebswelle abgewandte Längsende des Antriebsmotors gegen die Klemmrippe vorgespannt, was nicht nur eine Toleranzeinengung bewirkt, sondern auch die Antriebsmotordämpfung verbessert.

Schließlich sieht die Erfindung in Ausgestaltung der Antriebsanordnung vor, dass das Funktionselement elektronische Bauteile nach Art einer Leiterplatte trägt. Diese elektronischen Bauteile können Sensoren und/oder Schalter oder dergleichen sein, die der Steuerung der Antriebsanordnung und insbesondere der elektrischen Lenkverriegelung dienen.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:
Figur 1 in perspektivischer Ansicht eine erfindungsgemäße Antriebsanordnung einer elektrischen Lenkungsverriegelung mit ihren wichtigsten Bauteilen,
Figur 2 eine Perspektivansicht auf ein eine Antriebseinheit tragendes Trägerelement der erfindungsgemäßen Antriebsanordnung,
Figur 3 ein Funktionselement mit einem daran befestigten Kontakthalter in perspektivischer Ansicht,
Figur 4 eine vergrößerte Ansicht auf einen Ausschnitt des Trägerelements,
Figur 5 den Kontakthalter in perspektivischer Einzelteildarstellung,
Figur 6 in einer weiteren perspektivischen Ansicht die erfindungsgemäße Antriebsanordnung aus Figur 1,
Figur 7 die im Trägerelement gehaltene Antriebseinheit in perspektivischer Ansicht und
Figur 8 in perspektivischer Ansicht das Trägerelement.

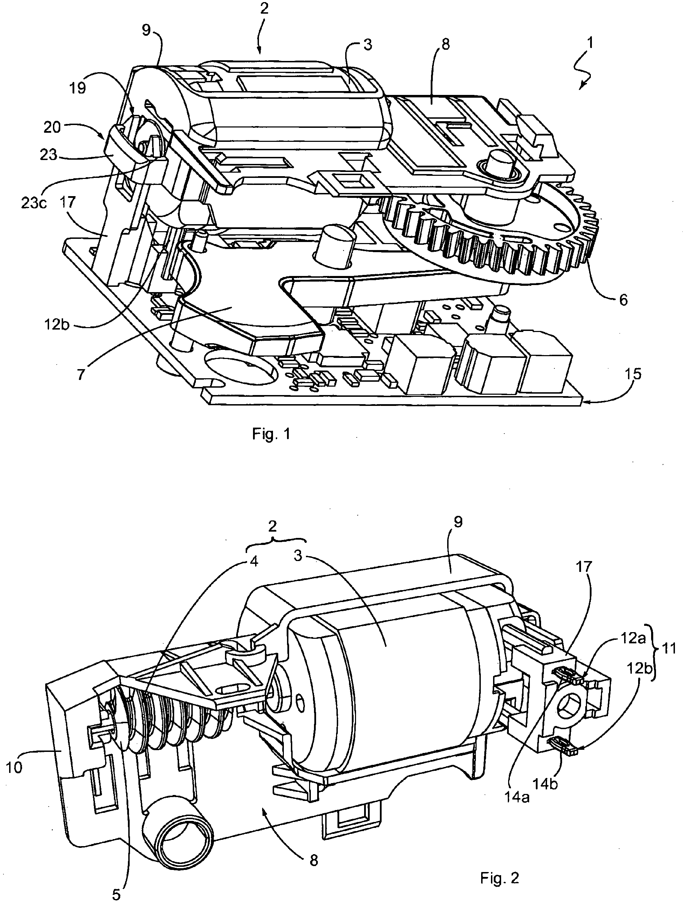

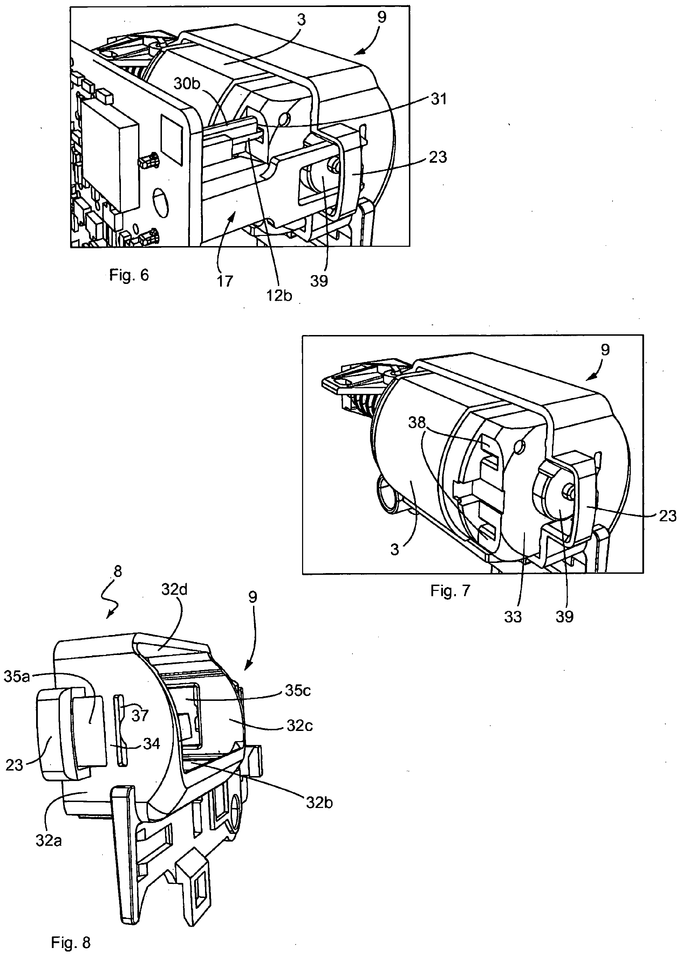

In Figur 1 sind wesentliche Bauteile einer erfindungsgemäßen Antriebsanordnung 1 einer elektrischen Lenkverriegelung dargestellt. Die Antriebsanordnung 1 der elektrischen Lenkverriegelung umfasst eine Antriebseinheit 2, die von einem Antriebsmotor 3 und einer aus Figur 2 ersichtlichen und mit dem Antriebsmotor 3 gekoppelten Antriebswelle 4, die mit einer Antriebsschnecke 5 ausgestattet ist, gebildet ist. Die Antriebswelle 3 ist einerseits mit dem Antriebsmotor 3 bewegungsgekoppelt und steht andererseits mit ihrer Antriebsschnecke 5 mit der Umfangszahnung eines Antriebsrades 6 in Eingriff, so dass die vom Antriebsmotor 3 auf die Antriebswelle 4 übertragene Kraft auf das Antriebsrad 6 zur Auslenkung eines Sperrbolzens 7 und folglich zur Verriegelung eines in den Figuren nicht näher dargestellten Lenkschlosses dient. Die Antriebseinheit 2 ist an einem plattenförmigen Trägerelement 8 angebracht, wobei der Antriebsmotor 3 in einem rahmenförmigen Motorhalter 9 (siehe zum Beispiel Figur 2) aufgenommen ist. Der rahmenförmige Motorhalter 9 ist von vier Rahmenseiten 32a, 32b, 32c und 32d (siehe Figur 8) gebildet, wobei die in Axialrichtung des Antriebsmotors 3 liegenden Rahmenseiten 32a und 32c jeweils Aussparungen 35a und 35c (siehe auch hierzu Figur 8) aufweisen. Das freie Ende der Antriebswelle 4 ist hingegen an einer Lagerstütze 10 abgestützt und wird von dieser drehbar gelagert, wie es beispielsweise in Figur 2 gezeigt ist.

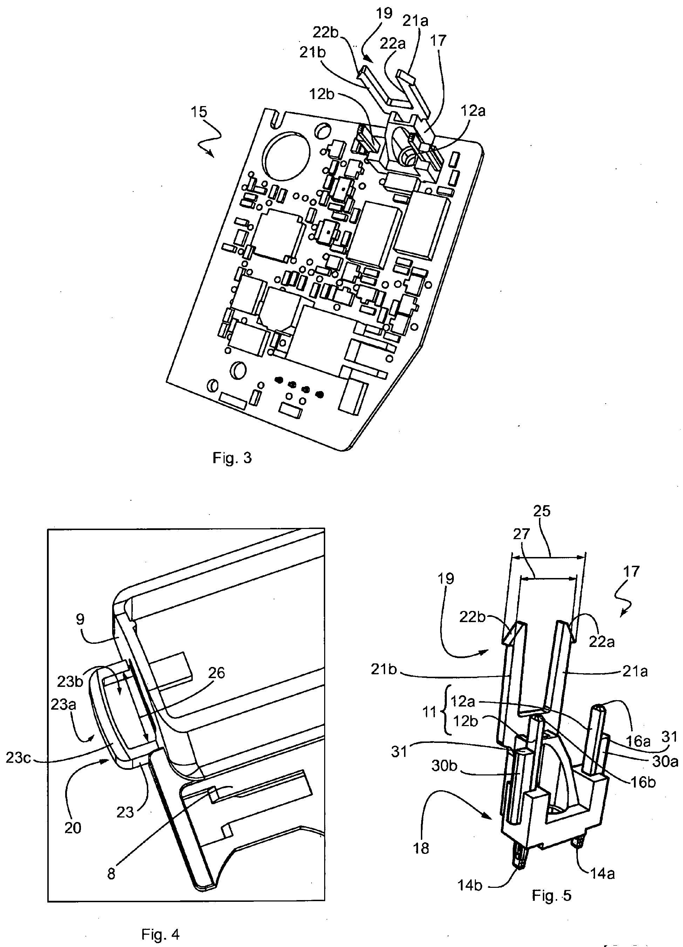

Die Antriebsanordnung 1 der elektrischen Lenkverriegelung weist ferner eine zur Stromversorgung des Antriebsmotors 3 ausgebildete Steckverbindung 11 (siehe zum Beispiel Figur 2 oder 5) auf, die zwei massive Stifte 12a und 12b umfasst. Die jeweiligen ersten Enden 14a, 14b der Stifte 12a, 12b sind an einem Funktionselement 15 der Antriebsanordnung 1 befestigt. Das Funktionselement 15 ist in dem vorliegenden Ausführungsbeispiel als Platine bzw. Leiterplatte ausgebildet und trägt elektronische Bauteile, die der Steuerung der elektrischen Lenkverriegelung dienen. Das jeweilige erste Ende 14a, 14b der Stifte 12a, 12b der Steckverbindung 11 ist in eine entsprechend zugeordnete metallisierte Lochwandung des Funktionselements 15 in elektrisch verbindender Weise eingepresst. Die zweiten Enden 16a, 16b der Steckverbindung 15, die in Figur 5 ersichtlich ist, stehen mit dem Antriebsmotor 3 in elektrischer und mechanischer Verbindung. Auf diese Weise versorgt das Funktionselement 15 den Antriebsmotor 3 mit Strom, wobei der Antriebsmotor 3 folglich über die Stifte 12a und 12b mit dem Funktionselement 15 elektrisch verbunden ist.

Ein Kontakthalter 17 erstreckt sich parallel zur Steckverbindung 11 bzw. zu den Stiften 12a, 12b und ist mit seinem ersten Längsende 18 an dem Funktionselement 15 befestigt. Der Kontakthalter 17 dient der mechanischen und elektrischen Verbindung von Funktionselement 15 und Antriebsmotor 3, wobei die Verbindung indirekt über das Trägerelement 8 erfolgt, an welchem der Kontakthalter 17 angreift. Dabei kann das erste Längsende 18 des Kontakthalters 17 über eine in den Figuren nicht näher dargestellte Schraubverbindung mit dem Funktionselement 15 formschlüssig verbunden sein. Das zweite Längsende 19 des Kontakthalters 17 ist ferner mit einem an dem Trägerelement 8 ausgebildeten Rastansatz 20 in einer Weise lösbar verbunden, dass die jeweiligen zweiten Enden 16a, 16b der Steckverbindung 11 in Richtung des Antriebmotors 3 gedrängt werden.

Genauer gesagt ist das zweite Längsende 19 des Kontakthalters 17 mit zwei parallel zueinander verlaufenden Federarmen 21a und 21b ausgebildet, an denen jeweils endseitig ein Rasthaken 22a und 22b angeformt ist. Die Rasthaken 22a, 22b weisen an der dem gegenüberliegenden Rasthaken 22a bzw. 22b wegweisenden Seitenfläche jeweils eine abgeschrägte Seitenfläche auf. Im zusammengebauten Zustand hintergreifen die jeweiligen Rasthaken 22a, 22b der Federarme 21a, 21b den am Trägerelement 8 ausgebildeten Rastansatz 20 derart, dass das Trägerelement 8 mit dem daran angeordneten Antriebsmotor 3 in Richtung des Funktionselements 15 gezogen wird. Alternativ kann der Kontakthalter 17 statt mit zwei Federarmen 21a, 21b zumindest mit einem Federarm mit einem einzigen, endseitig ausgebildeten und/oder angeformten Rasthaken ausgestattet sein.

Die rein mechanische Verbindung des Kontakthalters 17 mit dem Trägerelement 8 ist nach Art einer Steckschnalle bzw. eines Blitzverschlusses ausgeführt. Zu diesem Zweck ist der Rastansatz 20 des Trägerelements 8 mit einem Einsteckteil 23 ausgebildet, welches wiederum eine Einstecköffnung 23a und eine Rastöffnung 23b aufweist. Zur Herstellung der mechanischen Verbindung wird das zweite Längsende 19 des Kontakthalters 17 in die Einstecköffnung 23a des Einsteckteils 23 (demnach in Figur 4 von unten) eingeschoben. Aus Figur 5 ist ersichtlich, dass die Breite 25 des zweiten Längsendes 19 des Kontakthalters 17, die durch die schrägen Seitenflächen der Rasthaken 22a, 22b definiert ist, größer bemessen ist als die innere Breite 26 des Einsteckteils 23, so dass die angeschrägten Rasthaken 22a, 22b, die das zweite Längsende 19 des Kontakthalters 17 bilden, beim Einstecken in die Einstecköffnung 23a elastisch verformt werden und sich aufeinander zubewegen. Das zweite Längsende 19 des Kontakthalters 17 bzw. die Rasthaken 22a, 22b werden solange in das Einsteckteil 23 eingeschoben, bis die Rasthaken 22a, 22b zu der Rastöffnung 23b gelangen, wo sie sich wieder voneinander wegbewegen und in ihre Ausgangsposition elastisch zurückverformen können. Das Einsteckteil 23 zentriert und führt die Bewegung des zweiten Längsendes 19 des Kontakthalters 17. Nach Zurückverformung liegen die unterhalb der Rasthaken 22a, 22b ausgebildeten Bereiche der Federarme 21a, 21b ohne Spiel an der Innenwandung des Einsteckteils 23 an, weil die Breite 26 des Einsteckteils 23 der Distanz zwischen den äußeren Seitenkanten der Federarme 21a, 21b (siehe Figur 5) entspricht. Durch die Zurückverformung hintergreifen ferner die Rasthaken 22a, 22b den Rand 23c der Rastöffnung 23b, so dass eine formschlüssige Verbindung gebildet ist. Diese formschlüssige Verbindung weist kein Spiel auf, sondern lässt eine Zugkraft an dem Trägerelement 8 angreifen, indem die formschlüssige Verbindung das Trägerelement 8 in Richtung des Funktionselements 15 zieht. Anders ausgedrückt, weist das zweite Längsende 19 des Kontakthalters 17 zwei in Richtung zu sich selbst elastisch verformbare Verriegelungsarme 21a, 21b auf, welche mit ihren hakenförmig ausgebildeten Enden 22a, 22b den Rand 23c der Rastöffnung 23b hintergreifen. Auf diese Weise wird der Antriebsmotor 3 auf die Stifte 12a, 12b der Steckverbindung 11 gedrückt und die Kontaktierung des Antriebsmotors 3 sichergestellt. Dabei sind die zwei Stifte 12a, 12b von dem Kontakthalter 17 parallel zueinander verlaufend gehalten, wie beispielsweise Figur 5 zu entnehmen ist.

Damit sich die zwei massiven Stifte 12a, 12b der Steckverbindung 11 nicht zu "tief" in entsprechende, am Antriebsmotorkopf 33 angeordnete Kontaktöffnungen "bohren", weist der Kontakthalter 17 zwei Abstandsstifte 30a, 30b (siehe zum Beispiel Figur 5 oder Figur 6) auf, deren jeweilige freien Enden 31 auf Auflageflächen 38 (siehe Figur 7) des Antriebsmotors 3 aufliegen. Die Abstandsstifte 30a, 30b erstrecken sich parallel zu den Stiften 12a, 12b, wobei sie kürzer als die Stifte 12a, 12b ausgebildet sind. Auf diese Weise ist sichergestellt, dass die Stifte 12a, 12b immer mit einer erforderlichen "Tiefe" zur elektrischen Kontaktierung in den Kontaktöffnungen des Antriebsmotors 3 eingesetzt sind. Die Abstandsstifte 30a, 30b sind aus Kunststoff hergestellt und verhindern ein Rauswandern des Antriebsmotors 3 aus dem Motorhalter 9. In dem dargestellten Ausführungsbeispiel sind zwei Abstandsstifte 30a und 30b. Es ist jedoch ersichtlich, dass auch nur ein einziger Abstandsstift oder mehr als zwei Abstandsstifte in einer abgewandelten Ausführungsform vorgesehen sein können. Im Übrigen können die Abstandsstifte 30a, 30b einstückig mit dem Kontakthalter 17 ausgebildet sein.

Wie ferner in den Figuren 7 und 8 dargestellt ist, weist die Rahmenseite 32a des Motorhalters 9 eine Klemmrippe 34 auf, die oberhalb der Aussparung 35a ausgebildet ist, wobei die Klemmrippe 34 zwischen der Aussparung 35a und einer weiteren Aussparung 37 ausgebildet ist und für eine Vorspannung des Antriebsmotors 3 sorgt, wodurch die Toleranz, also das seitliche bzw. axiale Spiel des Antriebsmotors 3, eingeengt wird, was unter anderem die Motordämpfung verbessert. Im zusammengebauten Zustand der Antriebsanordnung 1 drückt die Klemmrippe 34 gegen das am Antriebsmotorkopf 33 hervorstehende Lager 39 des Antriebsmotors 3 und sorgt dadurch für die vorstehend angesprochene und vorteilhaft wirkende Vorspannung des Antriebsmotors 3.

Zusammengefasst ist vorstehend eine erfindungsgemäße Antriebsanordnung 1 einer elektrischen Lenkverriegelung beschrieben. Die Antriebsanordnung 1 umfasst die Antriebseinheit 2, die den Antriebsmotor 3 mit der Antriebswelle 4 aufweist, das Trägerelement 8, welches den rahmenförmigen Motorhalter 9 zur Aufnahme des Antriebsmotors 3 und die Lagerstütze 10 zur drehbaren Lagerung des Wellenendes der Antriebswelle 4 aufweist, und die zur Stromversorgung des Antriebsmotors 3 ausgebildete Steckverbindung 11, die mit ihrem ersten Ende 14a, 14b an dem Funktionselement 15 der Antriebsanordnung 1 befestigt ist und dort mit Strom versorgt wird und die mit ihrem zweiten Ende 16a, 16b mit dem Antriebsmotor 3 in Verbindung steht. Die Antriebsanordnung 1 gemäß der Erfindung ist durch den sich parallel zur Steckverbindung 11 erstreckenden Kontakthalter 17 charakterisiert, der mit seinem ersten Längsende 18 an dem Funktionselement 15 befestigt ist, wobei das zweite Längsende 19 des Kontakthalters 17 mit dem an dem Trägerelement 8 ausgebildeten Rastansatz 20 in einer das zweite Ende 16a, 16b der Steckverbindung 11 in Richtung des Antriebmotors 3 drängenden Weise lösbar verbunden ist.

Die vorstehend beschriebene Erfindung ist selbstverständlich nicht auf die beschriebene und dargestellte Ausführungsform beschränkt. Es ist ersichtlich, dass an der in der Zeichnung dargestellten Ausführungsform zahlreiche, dem Fachmann entsprechend der beabsichtigten Anwendung naheliegende Abänderungen vorgenommen werden können, ohne dass dadurch der Bereich der Erfindung verlassen wird. Dabei gehört zur Erfindung alles dasjenige, was in der Beschreibung enthalten und/oder in der Zeichnung dargestellt ist, einschließlich dessen, was abweichend von dem konkreten Ausführungsbeispiel für den Fachmann naheliegt.

## Patentansprüche

1. Antriebsanordnung (1) einer elektrischen Lenkverriegelung, aufweisend eine Antriebseinheit (2), die einen Antriebsmotor (3) mit einer Antriebswelle (4) umfasst, ein Trägerelement (8), welches einen rahmenförmigen Motorhalter (9) zur Aufnahme des Antriebsmotors (3) und eine Lagerstütze (10) zur drehbaren Lagerung eines Wellenendes der Antriebswelle (4) aufweist, und eine zur Stromversorgung des Antriebsmotors (3) ausgebildete Steckverbindung (11), die mit ihrem ersten Ende (14a, 14b) an einem Funktionselement (15) der Antriebsanordnung (1) befestigt ist und dort mit Strom versorgt wird und die mit ihrem zweiten Ende (16a, 16b) mit dem Antriebsmotor (3) in Verbindung steht,
**dadurch gekennzeichnet,**
**dass** ein sich parallel zur Steckverbindung (11) erstreckender Kontakthalter (17) mit seinem ersten Längsende (18) an dem Funktionselement (15) befestigt ist, wobei das zweite Längsende (19) des Kontakthalters (17) mit einem an dem Trägerelement (8) ausgebildeten Rastansatz (20) in einer das zweite Ende (16a, 16b) der Steckverbindung (11) in Richtung des Antriebmotors (3) drängenden Weise lösbar verbunden ist.

2. Antriebsanordnung (1) nach Anspruch 1, **dadurch gekennzeichnet, dass** das zweite Längsende (19) des Kontakthalters (17) als wenigstens ein Federarm (21a, 21b) mit einem endseitig angeformten Rasthaken (22a, 22b) ausgebildet ist, wobei der Rasthaken (22a, 22b) des wenigstens einen Federarms (21a, 21b) den am Trägerelement (8) ausgebildeten Rastansatz (20) in einer das Trägerelement (8) in Richtung des Funktionselements (15) ziehenden Weise hintergreift.

3. Antriebsanordnung (1) nach Anspruch 1 oder 2, **dadurch gekennzeichnet, dass** die Verbindung des zweiten Längsendes (19) des Kontakthalters (17) mit dem Rastansatz (20) des Trägerelements (8) nach Art einer Steckschnalle ausgebildet ist, wobei der Rastansatz (20) des Trägerelements (8) als Einsteckteil (23) mit einer Einstecköffnung (23a), in welche das zweite Längsende (19) des Kontakthalters (17) in das Einsteckteil (23) unter elastischer Verformung einsteckbar ist, und einer Rastöffnung (23b), bis zu der das zweite Längsende (19) des Kontakthalters (17) in das Einsteckteil (23) eingesteckt ist und unter elastischer Zurückverformung den Rand (23c) der Rastöffnung (23b) in einer das Trägerelement (8) in Richtung des Funktionselements (15) ziehenden Weise hintergreift, ausgebildet ist.

4. Antriebsanordnung (1) nach Anspruch 3, **dadurch gekennzeichnet, dass** das zweite Längsende (19) des Kontakthalters (17) zwei in Richtung zu sich selbst elastisch verformbare Verriegelungsarme (21a, 21b) aufweist, welche mit ihren hakenförmig ausgebildeten Enden (22a, 22b) den Rand (23c) der Rastöffnung (23b) hintergreifen.

5. Antriebsanordnung (1) nach einem der vorhergehenden Ansprüche, **dadurch gekennzeichnet, dass** die Steckverbindung (11) zwei Stifte (12a, 12b) umfasst, wobei ein jeweiliges erstes Ende (14a, 14b) eines jeweiligen Stiftes (12a, 12b) in eine entsprechend zugeordnete metallisierte Lochwandung des Funktionselements (15) in elektrisch verbindender Weise eingepresst ist.

6. Antriebsanordnung (1) nach Anspruch 5, **dadurch gekennzeichnet, dass** die zwei Stifte (12a, 12b) von dem Kontakthalter (17) parallel zueinander verlaufend gehalten sind.

7. Antriebsanordnung (1) nach einem der vorhergehenden Ansprüche, **dadurch gekennzeichnet, dass** der Kontakthalter (17) wenigstens einen Abstandsstift (30a, 30b) mit einem freien Ende (31) aufweist, wobei sich der wenigstens eine Abstandsstift (30a, 30b) parallel zur Steckverbindung (11) erstreckt und sein freies Ende (31) in einer ein Rauswandern des Antriebsmotors (3) aus dem rahmenförmigen Motorhalter (9) verhindernden Weise auf dem Antriebsmotor (3) aufliegt.

8. Antriebsanordnung (1) nach einem der vorhergehenden Ansprüche, **dadurch gekennzeichnet, dass** der rahmenförmige Motorhalter (9) an seiner dem Antriebsmotorkopf (33) zugewandten Rahmenseite (32a) eine den Antriebsmotor (3) in dessen Axialrichtung einspannende Klemmrippe (34) aufweist.

9. Antriebsanordnung (1) nach einem der vorhergehenden Ansprüche, **dadurch gekennzeichnet, dass** das erste Längsende (18) des Kontakthalters (17) mit dem Funktionselement (15) formschlüssig verbunden ist.

10. Antriebsanordnung (1) nach einem der vorhergehenden Ansprüche, **dadurch gekennzeichnet, dass** das Funktionselement (15) elektronische Bauteile nach Art einer Leiterplatte trägt.

## Claims

1. A drive arrangement (1) of an electric steering lock, comprising a drive unit (2), which comprises a drive motor (3) with a driveshaft (4), a support element (8), which comprises a frame-like motor retainer (9) for receiving the drive motor (3) and a bearing support (10) for the rotatable mounting of a shaft end of the driveshaft (4), and a plug connection (11) formed into the power supply of the drive motor (3), which with its first end (14a, 14b) is fastened to a function element (15) of the drive arrangement (1) where it is supplied with current and which with its second end (16a, 16b) is in connection with the drive motor (3), **characterized in that** a contact holder (17) extending parallel to the plug connection (11) is fastened with its first longitudinal end (18) on the function element (15), wherein the second longitudinal end (19) of the contact holder (17) is detachably connected with an engagement shoulder (20) formed on the support element (8) in a manner in which the second end (16a, 16b) of the plug connection (11) is pushed in the direction of the drive motor (3).

2. The drive arrangement (1) according to Claim 1, **characterized in that** the second longitudinal end (19) of the contact holder (17) is formed as at least one spring arm (21a, 21b) with an engagement hook (22a, 22b) moulded onto the end side, wherein the engagement hook (22a, 22b) of the at least one spring arm (21a, 21b) engages behind the engagement shoulder (20) formed on the support element (8) in a manner in which the support element (8) is pulled in the direction of the function element (15).

3. The drive arrangement (1) according to Claim 1 or 2, **characterized in that** the connection of the second longitudinal end (19) of the contact holder (17) is formed with the engagement shoulder (20) of the support element (8) in the manner of a plug-in buckle, wherein the engagement shoulder (20) of the support element (8) is formed as insert part (23) with an insert opening (23a), into which the second longitudinal end (19) of the contact holder (17) is insertable into the insert part (23) subject to elastic deformation, and an engagement opening (23b), up to which the second longitudinal end (19) of the contact holder (17) is inserted into the insert part (23) and, subject to the original shape being elastically restored, engages behind the edge (23c) of the engagement opening (23b) in a manner in which the support element (8) is pulled in the direction of the function element (15).

4. The drive arrangement (1) according to Claim 3, **characterized in that** the second longitudinal end (19) of the contact holder (17) comprises two locking arms (21a, 21b) which in the direction to themselves are deformable, which with their ends (22a, 22b) formed hook-like engage behind the edge (23c) of the engagement opening (23b).

5. The drive arrangement (1) according to any one of the preceding claims, **characterized in that** the plug connection (11) comprises two pins (12a, 12b), wherein a respective first end (14a, 14b) of a respective pin (12a, 12b) is pressed into a suitably allocated metalized perforated wall of the function element (15) in an electrically connecting manner.

6. The drive arrangement (1) according to Claim 5, **characterized in that** the two pins (12a, 12b) are held by the contact holder (17) in a manner in which they run parallel to one another.

7. The drive arrangement (1) according to any one of the preceding claims, **characterized in that** the contact holder (17) comprises at least one spacer pin (30a, 30b) with a free end (31), wherein the at least one spacer pin (30a, 30b) extends parallel to the plug connection (11) and its free end (31) lies on the drive motor (3) in a manner in which migrating out of the frame-like motor retainer (9) of the drive motor (3) is prevented.

8. The drive arrangement (1) according to any one of the preceding claims, **characterized in that** the frame-like motor retainer (9) on its frame side (32a) facing the drive motor head (33) comprises a clamping rib (34) clamping the drive motor (3) in its axial direction.

9. The drive arrangement (1) according to any one of the preceding claims, **characterized in that** the first longitudinal end (18) of the contact holder (17) is connected to the function element (15) in a positively joined manner.

10. The drive arrangement (1) according to any one of the preceding claims, **characterized in that** the function element (15) carries electronic components in the manner of a circuit board.

## Revendications

1. Dispositif d'entraînement (1) d'un verrouillage de direction électrique, présentant une unité d'entraînement (2), qui comprend un moteur d'entraînement (3) avec un arbre d'entraînement (4), un élément de support (8), qui présente un support de moteur en forme de châssis (9) pour recevoir le moteur d'entraînement (3) et un support de palier (10) pour le positionnement rotatif d'une extrémité d'arbre de l'arbre d'entraînement (4), et une liaison enfichable (11) conçue afin d'alimenter électriquement le moteur d'entraînement (3), qui est fixée par sa première extrémité (14a, 14b) sur un élément fonctionnel (15) du dispositif d'entraînement (1) et y est alimenté en courant électrique et qui est en liaison par sa deuxième extrémité (16a, 16b) avec le moteur d'entraînement (3), **caractérisé en ce que** un support de contact (17) s'étendant parallèlement à la liaison enfichable (11) est fixée par sa première extrémité longitudinale (18) à l'élément fonctionnel (15), dans lequel la deuxième extrémité longitudinale (19) du support de contact (17) est reliée de manière amovible avec un épaulement d'encliquetage (20) réalisé sur l'élément de support (8) d'une manière refoulant la deuxième extrémité (16a,16b) de la liaisons enfichable (11) dans la direction du moteur d'entraînement (3).

2. Dispositif d'entraînement (1) selon la revendication 1, **caractérisé en ce que** la deuxième extrémité longitudinale (19) du support de contact (17) est conçu comme au moins un bras de ressort (21a,21b) avec un crochet d'encliquetage façonné du côté d'extrémité (22a,22b), dans lequel le crochet d'encliquetage (22a,22b) d'au moins un bras de ressort (21a,21b) vient en prise par derrière d'une manière tirant l'élément porteur (8) dans la direction de l'élément fonctionnel (15) avec l'épaulement d'encliquetage (20) réalisé sur l'élément porteur (8).

3. Dispositif d'entraînement (1) selon la revendication 1 ou 2, **caractérisé en ce que** la liaison de la deuxième extrémité longitudinale (19) du support de contact (17) avec l'épaulement d'encliquetage (20) de l'élément porteur (8) est conçu à la manière d'une boucle enfichable, dans lequel l'épaulement d'encliquetage (20) de l'élément porteur (8) est conçu comme une partie enfichable (23) avec une ouverture enfichable (23a), dans laquelle la deuxième extrémité longitudinale (19) du support de contact (17) peut-être enfichée dans la partie enfichable (23) sous déformation élastique, et une ouverture d'encliquetage (23b), jusqu'à laquelle la deuxième extrémité longitudinale (19) du support de contact (17) est enfichée dans la partie enfichable (23) et vient en prise par derrière sous rétro déformation élastique avec le bord (23c) de l'ouverture d'encliquetage (23b) d'une manière tirant l'élément porteur (8) dans la direction de l'élément fonctionnel (15).

4. Dispositif d'entraînement (1) selon la revendication 3, **caractérisé en ce que** la deuxième ouverture longitudinale (19) du support de contact (17) présente deux bras de verrouillage (21a,21b) déformables élastiquement dans la direction l'un de l'autre, qui viennent en prise par derrière par leurs extrémités réalisées en forme de crochet (22a,22b) avec le bord (23c) de l'ouverture d'encliquetage (23b).

5. Dispositif d'entraînement (1) selon une des revendications précédentes, **caractérisé en ce que** la liaisons enfichable (11) comprend deux goupilles (12a,12b), dans lequel une première extrémité respective (14a,14b) d'une goupille respective (12a,12b) est pressée d'une manière reliant électriquement dans un alésage de paroi métallisé coordonné de l'élément fonctionnel (15).

6. Dispositif d'entraînement (1) selon la revendication 5, **caractérisé en ce que** les deux goupilles (12a, 12b) sont maintenues en s'étendant parallèlement l'une à l'autre à partir du support de contact (17).

7. Dispositif d'entraînement (1) selon une des revendications précédentes, **caractérisé en ce que** le support de contact (17) présente au moins une goupille de positionnement (30a,30b) avec une extrémité libre (31), dans lequel au moins une goupille de positionnement (30a,30b) s'étend parallèlement à la liaison enfichable (11) et son extrémité libre (31) vient reposer sur le moteur d'entraînement (3) d'une manière empêchant que le moteur d'entraînement (3) sorte du support de moteur (9) en forme de châssis.

8. Dispositif d'entraînement (1) selon une des revendications précédentes, **caractérisé en ce que** le support de moteur en forme de châssis (9) présente sur son côté de châssis (32a) tourné vers la tête de moteur d'entraînement (33) une nervure de serrage (34) enserrant le moteur d'entraînement (3) dans sa direction axiale.

9. Dispositif d'entraînement (1) selon une des revendications précédentes, **caractérisé en ce que** la première extrémité longitudinale (18) du support de châssis (17) est reliée par complémentarité de forme avec l'élément fonctionnel (15).

10. Dispositif d'entraînement (1) selon une des revendications précédentes, **caractérisé en ce que** l'élément fonctionnel (15) supporte des composants électroniques du type d'une plaquette de circuits imprimé.
